(19) Europäisches Patentamt
European Patent Office
Office européen des brevets

(11) **EP 3 499 437 A1**

(12) **EUROPEAN PATENT APPLICATION**
published in accordance with Art. 153(4) EPC

(43) Date of publication:
**19.06.2019 Bulletin 2019/25**

(51) Int Cl.:
***G06Q 10/04*** *(2012.01)*   ***G05B 19/418*** *(2006.01)*

(21) Application number: **18767101.1**

(22) Date of filing: **19.01.2018**

(86) International application number:
**PCT/JP2018/001532**

(87) International publication number:
**WO 2018/168193 (20.09.2018 Gazette 2018/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **17.03.2017   JP 2017052115**

(71) Applicant: **Hitachi, Ltd.**
**Tokyo 100-8280 (JP)**

(72) Inventors:
• **TAKAYANAGI, Taisuke**
  **Tokyo 100-8280 (JP)**
• **YANO, Kojin**
  **Tokyo 100-8280 (JP)**
• **OKADA, Kenichirou**
  **Tokyo 100-8280 (JP)**

(74) Representative: **Manitz Finsterwald**
**Patent- und Rechtsanwaltspartnerschaft mbB**
**Martin-Greif-Strasse 1**
**80336 München (DE)**

(54) **BUSINESS IMPROVEMENT ASSISTANCE DEVICE AND BUSINESS IMPROVEMENT ASSISTANCE METHOD**

(57)   [Problem] It is to estimate a causal relation between predetermined data at high precision and at ease, taking nonlinearity between the data into consideration.

[Solving Means] A work improvement support device 100 is comprised of a nonlinear term adding unit 111 for calculating a nonlinear value as for respective working data 4 in the working data group 5 and adding the nonlinear value to a working data group 5, a multiple regression analysis unit 112 for calculating a regression formula as for respective working data 4 according to the multiple linear regression analysis, a data group setting unit 113 for determining whether there is a linear term in the calculated regression formula and setting the predetermined data comprising the linear term and the objective variable of the regression formula as the same group, and an explanatory variable candidate selecting unit 114 for selecting the working data 4, excluding the predetermined data, as the explanatory variable candidates for the multiple linear regression analysis.

FIG. 1C

104

PROCESSOR

| INFORMATION OBTAINING UNIT | 110 |
| NONLINEAR TERM ADDING UNIT | 111 |
| MULTIPLE REGRESSION ANALYSIS UNIT | 112 |
| DATA GROUP SETTING UNIT | 113 |
| EXPLANATORY VARIABLE CANDIDATE SELECTING UNIT | 114 |
| CORRELATION COEFFICIENT CALCULATING UNIT | 115 |
| DATA DISTANCE SETTING UNIT | 116 |
| SIMILAR WORD LIST | 1161 |
| KEY WORD DETERMINING UNIT | 1162 |
| DATA CLASSIFYING UNIT | 1163 |
| GROUP INFORMATION DISPLAYING UNIT | 117 |

**Description**

[Technical Field]

The invention relates to a work improvement support device and a work improvement support method.

[Background Art]

A work control system of social infrastructure such as railway, water and sewerage, and urban transportation, consists of a plurality of subsystems. For example, a work control system of a railway consists of 100 and more subsystems (see Non-patent Literature 1).
This social infrastructure requires continual work improvement. For example, taking notice to the railway maintenance, while the maintenance costs tend to increase according to the decaying facilities, the transportation revenue is supposed to decrease according to the falling population. Therefore, planning of work improvement is required to decrease the maintenance costs without damaging the safety of the transportation.
For the planning of the work improvement, it is necessary to unify and analyze the working data accumulated by the respective subsystems, to extract the work to be a key for improving KPI (corresponding to the maintenance costs, taking the railway maintenance as an example). To extract this work to be a key for KPI improvement, a structural causal model (causal graph) with causal relationship among the working data expressed in a directional graph is useful.
By using this structural causal model, a KPI change in making improvements on a work can be simulated quantitatively (see Non-patent literature 2). Accordingly, it is possible to extract the work to be a key for KPI improvement and plan improvement policies properly.
When estimating the abovementioned structural causal model according to a large amount of data, a multiple linear regression analysis is used in many cases. In the multiple linear regression analysis, data Y corresponding to KPI are defined as an objective variable and the other data X1, X2, ... Xn are defined as each explanatory variable, hence to calculate a regression formula of the Y. In the estimation of the structural causal model, with the explanatory variables included in the regression formula further defined as a new objective variable, a multiple regression analysis is successively repeated, hence to estimate the structural causal model of the whole data.
The abovementioned multiple linear regression analysis is a method of analyzing a correlation between the Y and the X1, X2, ... Xn quantitatively, and therefore it is fundamentally wrong for automatic estimation of a causal relation. This is because in the multiple linear regression analysis, the regression formula of the objective variable Y is expressed with the linear coupling of the explanatory variables.
For example, assume that certain working data Y have the following causal relation with the other data X. Here, a is the constant.

$$Y = a \cdot X$$

In the above expression, X of the left side indicates a cause and Y of the right side indicates the result. However, when the data X is defined as the objective variable, the multiple linear regression analysis derives the following expression similarly.

$$X = a^\wedge - 1 \cdot Y$$

Accordingly, in the multiple regression analysis, a causal relation may be inverted depending on what to select as the objective variable. To set the objective variable, an operator's knowledge is required.
To solve this problem, in the conventional art, by newly using time precedence information as the sequence of the process in a production line, the context among the data is cleared and also in the data analysis on the basis of the multiple linear regression analysis, automatic estimation of the causal relation is enabled (see Patent Literature 1).
Further, there is disclosed the conventional technique about the precision improvement of the regression formula derived from the multiple linear regression analysis (see Patent Literature 2). In the multiple linear regression analysis, the regression formula of the Y is derived from the linear coupling of X1, X2, ... Xn. Accordingly, when the respective data have the time series information and the true regression formula of the Y includes the time differentiation of X1, X2, ... Xn, an accurate regression formula is difficult to be derived. In these conventional techniques, time differentiation of an explanatory variable is calculated on the basis of the data and added as a new explanatory variable, hence to be able to derive a regression formula including the time differential term also in the data analysis on the basis of the multiple linear regression analysis.

Further, the conventional technique about the multiple linear regression analysis when data have multicollinearity is disclosed (see Patent Literature 3). When the explanatory variable has multicollinearity, in the multiple linear regression analysis, the explanatory variables cannot be distinguished from each other and the regression formula cannot be derived correctly. In the conventional technique, a single regression analysis is performed among the explanatory variables in advance and the data having a correlation coefficient of a predetermined value and more are grouped. Only one piece of data from each group is selected and added to the explanatory variable, hence to enable the data analysis on the basis of the multiple linear regression analysis even when the data have multicollinearity.

[Citation List]

[Patent Literature]

[PTL 1] Japanese Patent Application Laid-Open Publication No. 2006-65598
[PTL 2] Japanese Patent Application Laid-Open Publication No. 2016-31714
[PTL 3] Japanese Patent Application Laid-Open Publication No. 05-233011

[Non-patent Literature]

[NPTL 1] Rail Safety and Standards Board, "The Railway Technical Strategy 2012," Rail Safety and Standards Board, Tech. Rep., 2012. [Online]. Available: http://futurerailway.org/RTS/
[NPTL 2] J. W. Forrester, "Industrial Dynamics," MIT Press, (1961)

[Summary of the Invention]

[Technical Problem]

When working data of social infrastructure are analyzed, the precedence over time and the sequence relationship among the working data is not necessarily cleared. Accordingly, in the data analysis using the multiple linear regression analysis, there is a problem that it is hard to estimate a causal relation automatically even when adopting the conventional techniques (example: the method described in Patent Literature 1).

Further, in the abovementioned analysis of the working data, when some data Y are defined as the objective variable and the other data X1, X2, ... Xn are defined as the explanatory variables, the regression formula of the Y often shows various types of nonlinearity as for the explanatory variables. As an example of the nonlinearity, there is time integration in addition to the time differentiation of the explanatory variables. Further, the square of the explanatory variable and the product of the explanatory variables are representative. However, the square root of the explanatory variable is hardly found experimentally. In this case, in the data analysis using the multiple linear regression analysis, estimation of accurate regression formula is considered to be difficult even if adopting the conventional techniques (example: the method described in Patent Literature 2).

Further, it is difficult to automatically select the data to be used for analysis from the data group mutually showing multicollinearity. Which variable to select generally requires the operator's knowledge and judgment. Accordingly, even when adopting the conventional techniques (example: the method described in Patent Literature 3), there is a problem that it is hard to estimate an accurate structural causal model automatically.

An object of the invention is to provide a technology capable of estimating a causal relation between predetermined data, at high precision and at ease, taking the nonlinearity between the above data into consideration.

[Solution to Problem]

To solve the problems, the work improvement support device of the invention is a device for estimating a structural causal model among the working data on the basis of predetermined working data, including a nonlinear term adding unit for calculating a nonlinear value as for the working data and adding the nonlinear value to the working data, a multiple regression analysis unit for calculating a regression formula as for respective working data according to the multiple linear regression analysis, a data group setting unit for determining whether there is a linear term in the calculated regression formula and setting the predetermined data comprising the linear term and the objective variable of the regression formula as the same group, and an explanatory variable candidate selecting unit for selecting the working data, excluding the predetermined data as the explanatory variable candidates for the multiple linear regression analysis.

Further, according to the work improvement support method of the invention, the work improvement support device for estimating a structural causal model among the working data, on the basis of predetermined working data, performs processing of calculating a nonlinear value as for the working data and adding the nonlinear value to the working data, processing of calculating a regression formula as for respective working data according to the multiple linear regression analysis, processing of determining whether there is a linear term in the calculated regression formula and setting the predetermined data comprising the linear term and the objective variable of the regression formula as the same group, and processing of selecting the working data, excluding the predetermined data, as the explanatory variable candidates for the multiple linear regression analysis.

[Advantageous Effects of Invention]

According to the invention, it is possible to estimate a causal relation between predetermined data at high precision and at ease, taking the nonlinearity between the above data into consideration.

[Brief Description of the Drawings]

Fig. 1A is a diagram showing a configuration of a work improvement support device according to a first embodiment.
Fig. 1B is a diagram showing a configuration example of a working data group according to the first embodiment.
Fig. 1C is a diagram showing a configuration example of a function unit according to the first embodiment.
Fig. 2 is a diagram showing a first flow example of a work improvement support method according to the first embodiment.
Fig. 3 is an explanatory diagram showing a method of grouping the data having multicollinearity and automatically selecting an explanatory variable candidate.
Fig. 4 is a diagram showing a second flow example of a work improvement support method according to the first embodiment.
Fig. 5 is a diagram showing a display example 1 of the structural causal model according to the first embodiment.
Fig. 6 is a diagram showing a display example 2 of the structural causal model according to the first embodiment.
Fig. 7 is a diagram showing a display example 3 of the structural causal model according to the first embodiment.
Fig. 8 is a diagram showing a user operation example 1 in the structural causal model according to the first embodiment.
Fig. 9 is a diagram showing a user operation example 2 in the structural causal model according to the first embodiment.
Fig. 10 is a diagram showing a user operation example 3 in the structural causal model according to the first embodiment.
Fig. 11A is a diagram showing a display form example 1 of the structural causal model according to the first embodiment.
Fig. 11B is a diagram showing a display form example 2 of the structural causal model according to the first embodiment.
Fig. 11C is a diagram showing a display form example 3 of the structural causal model according to the first embodiment.
Fig. 12 is an explanatory diagram showing a method of defining data distance according to a second embodiment.
Fig. 13 is a diagram showing a display example of a similar word register screen according to a third embodiment.

[Detailed Description of Embodiments]

--- First Embodiment ---

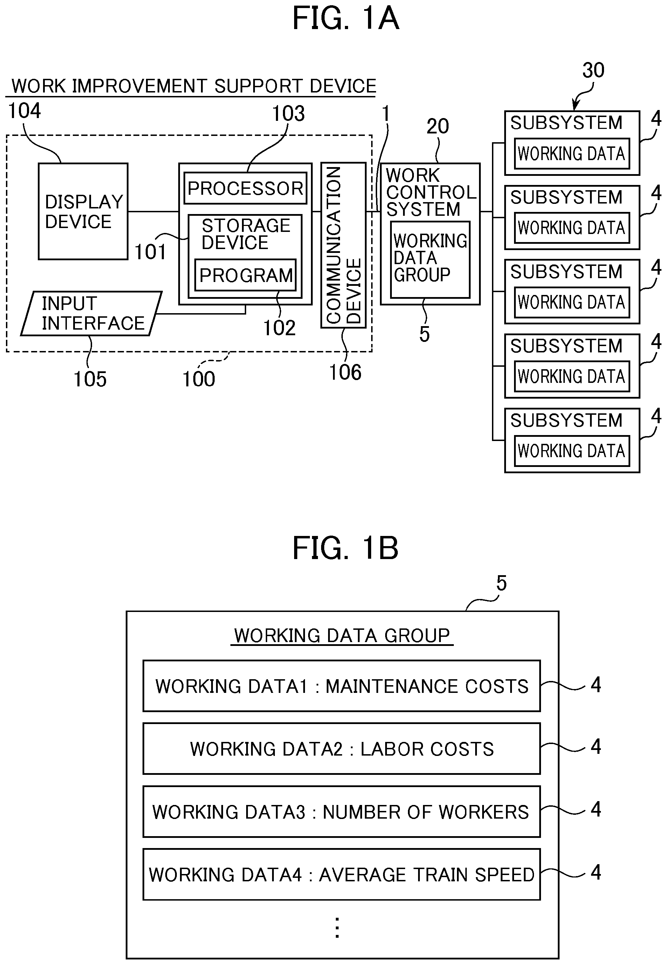

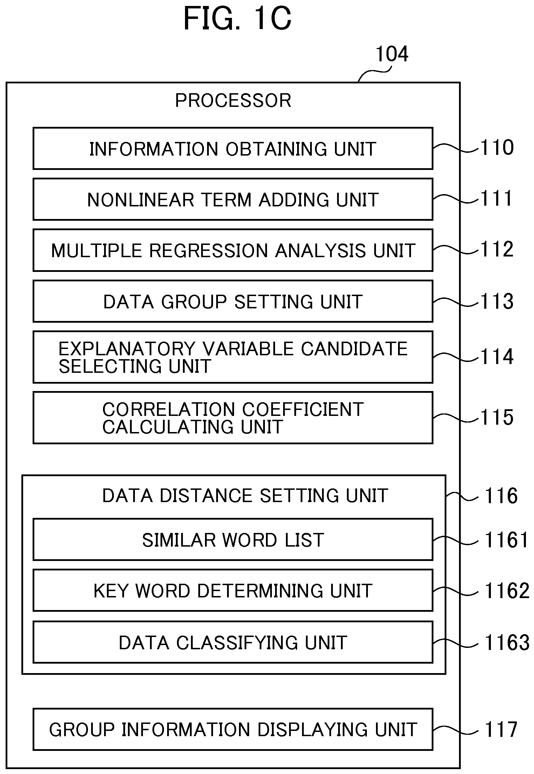

Embodiments of the invention will be hereinafter described in details using the drawings. Fig. 1A is a network configuration diagram including a work improvement support device 100 of the present embodiment. The work improvement support device 100 shown in Fig. 1 is a computer device capable of estimating a causal relation between predetermined data at high precision and at ease, taking the nonlinearity between the above data into consideration.

The work improvement support device 100 shown in Fig. 1A is communicatively coupled to a database (hereinafter, a work control system) 20 with working data 5 accumulated, through a predetermined network 1. This work control system 20 is to collect the working data 4 in a social infrastructure system including a plurality of subsystems 30 and to manage the above data as a working data group 5. An example of the working data group 5 and the working data 4 comprising this in the first embodiment is shown in Fig. 1B. As illustrated, the working data group 5 is a collectivity of several types of the working data 4 obtained from the respective subsystems 30.

The work control system 20 is coupled to the respective subsystems 30 to collect and record the working data 4 held in the respective subsystems 30. Alternatively, the work improvement support device 100 may include the configuration and function of the abovementioned work control system 20.

The work improvement support device 100 includes a storage device 101 composed of SSD, hard disk drive, or memory, a processor 103 such as CPU that reads a program 102 from the storage device 101 and executes the program, a display device 104 such as a display that displays the processing results of the processor 103, an input interface 105 such as a keyboard and a mouse that receives an instruction from a user, and a communication device 106 that gains access to the abovementioned network 1 to execute the communication processing, as a hardware configuration. These are mutually coupled to each other through internal wiring such as bus.

Further, the abovementioned work improvement support device 100 executes the program 102 in the processor 103, hence to install the respective function units shown in Fig. 1C. Of the function units installed by the work improvement support device 100, an information obtaining unit 110 obtains the working data group 5 from the work control system 20 according to an operator's instruction received by the input interface 105, displays list information of all the working data 4 on the display device 104, automatically extracts the working data related to KPI data, upon receipt of the operator's selection of one piece of working data 4 as the KPI data, from the respective working data 4 shown in the above list information, with a predetermined algorithm, and stores the above in the storage device 101.

Further, a nonlinear term adding unit 111 calculates a nonlinear value as for respective working data in the working data group 5 obtained from the work control system 20 and adds the nonlinear value to the abovementioned working data group 5. Here, the working data group 5 is a collectivity of various types of the working data 4 obtained from the respective subsystems 30.

Further, a multiple regression analysis unit 112 calculates a regression formula as for respective working data 4 included in the working data group 5 through multiple linear regression analysis. The concrete contents of this calculation will be described later.

Further, a data group setting unit 113 determines whether there is a nonlinear term or not in the regression formula calculated by the abovementioned multiple regression analysis unit 112 and sets predetermined data comprising the linear term and the objective variable of the regression formula in the same group.

Further, an explanatory variable candidate selecting unit 114 selects the working data 4 obtained by excluding the abovementioned predetermined data handled by the data group setting unit 113, as explanatory variable candidates of multiple linear regression analysis.

Further, a correlation coefficient calculating unit 115 calculates a correlation coefficient as for at least one combination of the abovementioned working data 4. In this case, the data group setting unit 113 sets together the working data with the correlation coefficient calculated by the correlation coefficient calculating unit 115 exceeding a predetermined threshold, in the same group. Further, the explanatory variable candidate selecting unit 114 selects a piece of working data 4 one by one arbitrarily from each group including the working data having the abovementioned correlation coefficient exceeding the predetermined threshold, as the explanatory variable candidates of the multiple linear regression analysis.

Further, a data distance setting unit 116 sets a distance between the respective working data 4, as for each space between the working data. In this case, the explanatory variable candidate selecting unit 114 selects the working data 4 having a distance longer than the objective variable, as the explanatory variable candidates of the multiple linear regression analysis. Here, the data distance setting unit 116 may determine a distance of each space between the working data 4, on the basis of the structure of a data table such as ER diagram of various types of the working data 4.

Alternatively, the data distance setting unit 116 may include a similar word list 1161 in which key word groups determined as the similar or the same groups are described in every group. The data distance setting unit 116 in this case includes a key word determining unit 1162 that determines whether or not a title of the working data 4 includes a key word described in the similar word list 1161 and a data classifying unit 1163 that classifies the working data 4 in every table including the key word determined to be included in the working data 4 as the result of the determination, hence to determine a distance of each space between the working data 4 on the basis of the result of the above classification.

Further, a group information displaying unit 117 displays the information of the working data 4 belonging to the same group set by the abovementioned data group setting unit 113, as for respective working data 4, in a user interface for displaying the estimated structural causal model on the display device 104.

Preferably, the abovementioned group information displaying unit 117 may display the information of the working data 4 belonging to the abovementioned same group, as for respective working data 4, and receive a user's instruction for setting the other piece of working data 4 belonging to the group as a selection target, instead of the selected one piece of working data 4.

Further, when displaying the information of the working data 4 belonging to the abovementioned same group, as for respective working data 4, preferably, the abovementioned group information displaying unit 117 may display a combination of a node corresponding to the selected one piece of working data 4 and a node corresponding to the other piece of working data 4 belonging to the group, in the structural causal model.

Further, in displaying the information of the working data 4 belonging to the abovementioned same group, as for respective working data 4, preferably, the abovementioned group information displaying unit 117 may display a node corresponding to the other piece of working data 4 belonging to the group when predetermined instruction means (example: cursor and the like) in the user interface output by the display device 104 approaches a predetermined distance range from the node corresponding to the abovementioned selected one piece of working data 4.

Further, in displaying the information of the working data 4 belonging to the abovementioned same group, as for respective working data 4, preferably, the abovementioned group information displaying unit 117 may display the node corresponding to the abovementioned selected one piece of working data 4 and the node corresponding to the other piece of working data 4 belonging to the group in a combination, in the structural causal model, receive a user's instruction for shifting the node corresponding to the abovementioned other piece of working data 4 to a display position of the node corresponding to the abovementioned selected one piece of working data 4, and set the abovementioned other piece of working data 4, instead of the abovementioned selected one piece of working data, as a selection target when receiving a user's instruction for making the abovementioned node corresponding to the one piece of working data 4 away from the abovementioned node corresponding to the other piece of working data 4.

Further, preferably, the abovementioned group information displaying unit 117 may display the node corresponding to the other working data 4 directly coupled by the edge in the structural causal model, in a predetermined form, as for the predetermined working data 4 receiving a user's instruction.

Further, preferably, the abovementioned group information displaying unit 117 may arrange a node indicating the information of the regression formula about the space between the corresponding working data 4, in the space between the nodes corresponding to the respective working data 4 in the structural causal model, when displaying the estimated structural causal model.

Hereinafter, actual procedure of the work improvement support method according to the first embodiment will be described on the basis of the drawings. Various kinds of operations corresponding to the work improvement support method described later are realized by the program 102 executed by the abovementioned work improvement support device 100. This program 102 is comprised of codes for performing various kinds of operations described later.

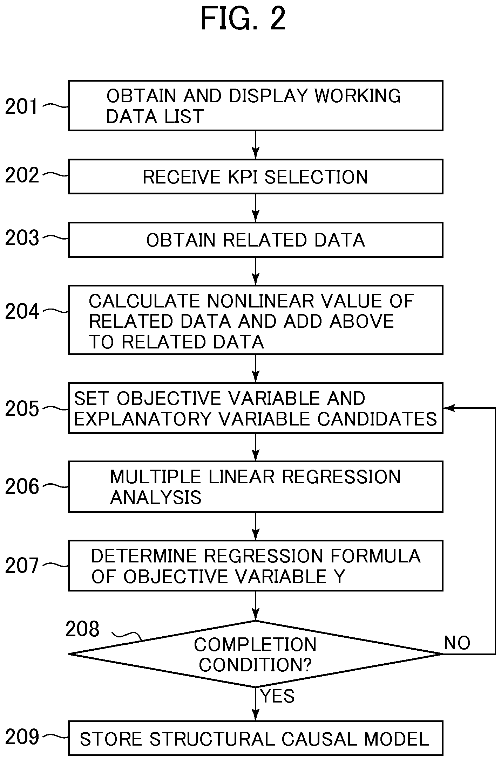

Fig. 2 is a view showing a first flow example of the work improvement support method according to the present embodiment. Here, it shows a series of flow about automatic estimation of a structural causal model, to describe the processing of the work improvement support device 100 according to the first embodiment of the invention.

In this case, an operator of the work improvement support device 100 starts a predetermined program in the work improvement support device 100 and analyzes a causal relation between the respective working data 4 in the working data group 5, to extract a key contributing to the improvement of the predetermined KPI and plan work improvement policies properly. Here, it is supposed that the information obtaining unit 110 of the work improvement support device 100 displays a predetermined screen on the display device 104.

On the other hand, it is assumed that the operator views the abovementioned screen on the display device 104, operates the input interface 105 to push down a predetermined button on the screen, and displays a list of all the working data 4. In reply to the above push, the information obtaining unit 110 of the work improvement support device 100 obtains the working data group 5 from the work control system 20 and makes the display device 104 display the list information of all the working data 4 (Step 201).

The abovementioned operator views the list information of the working data 4 on the display device 104, operates the input interface 105, and selects one piece of working data that becomes the KPI (by way of example of railway maintenance, maintenance costs and the like) (hereinafter, KPI data), from the respective working data 4 shown in the list information.

At that point, the information obtaining unit 110 of the work improvement support device 100 receives the selected contents of the KPI data by the abovementioned operator (Step 202) .

As mentioned above, upon receipt of the selection of the KPI data by the operator, the information obtaining unit 110 of the work improvement support device 100 automatically extracts the working data related to the KPI data (hereinafter, related data) from all the working data 4 obtained in Step 201, with a predetermined algorithm and stores the above in the storage device 101 (Step 203). The information obtaining unit 110 may modify and process the abovementioned related data automatically extracted into a data format suitable for the analysis described later.

Here, the working data having a relation or the related data are supposedly the working data 4, for example, recorded in the same table (example: a table with working data for maintenance costs stored). Alternatively, even if in a different table (example: a table with the working data for maintenance costs stored and a table with the working data for the number of workers stored), it may be the working data 4 recorded in a table including a common key (for example, data obtaining time and date and the like) . Further, in the social infrastructure system including a plurality of subsystems 30, it may be the working data 4 obtained by the same subsystem 30.

According to the first embodiment, n pieces of related data (X1, X2, X3, ... Xn) are supposed to be extracted from the work control system 20. When this related data are stored in the storage device 101, the nonlinear term adding unit 111 of the work improvement support device 100 calculates a nonlinear value X' as for the related data (Step 204). Here, the square of the data shown as follows is considered as one example of the nonlinear value.

$$X' = X_i \times X_i \qquad (\, 1 \le i \le n \,)$$

-----(Expression 1)

The nonlinear term adding unit 111 stores the calculated nonlinear value X' in the storage device 101 as new related data (Xn+1, ... Xm). In the first embodiment, when n+1 ≤ i ≤ m, the related data Xi show the nonlinear value of the original data extracted from the work control system 20.

Here, in the first embodiment, although the square of the data (Expression 1) is taken as an example of the abovementioned nonlinear value, arbitrary nonlinear value may be calculated depending on the observed social infrastructure and may be added to the related data. For example, the product of the two data shown as follows can be considered as the other example of the nonlinear value.

$$X' = X_i \times X_j \qquad (\, 1 \le i < j \le n \,)$$

-----(Expression 2)

Further, when the data have time series information from time t1 to time t2,

$$X' = \int_{t_1}^{t_2} X_i \, dt \quad (\, 1 \le i \le n \,)$$

-----(Expression 3)

the time integration of the data as mentioned above can be considered.

Thereafter, it is assumed that the abovementioned operator pushes down a predetermined button (example: a start button of the structural causal model estimation) displayed on the screen of the display device 104, using the input interface 105. In reply to this, the work improvement support device 100 starts the estimation of the structural causal model about the abovementioned KPI data.

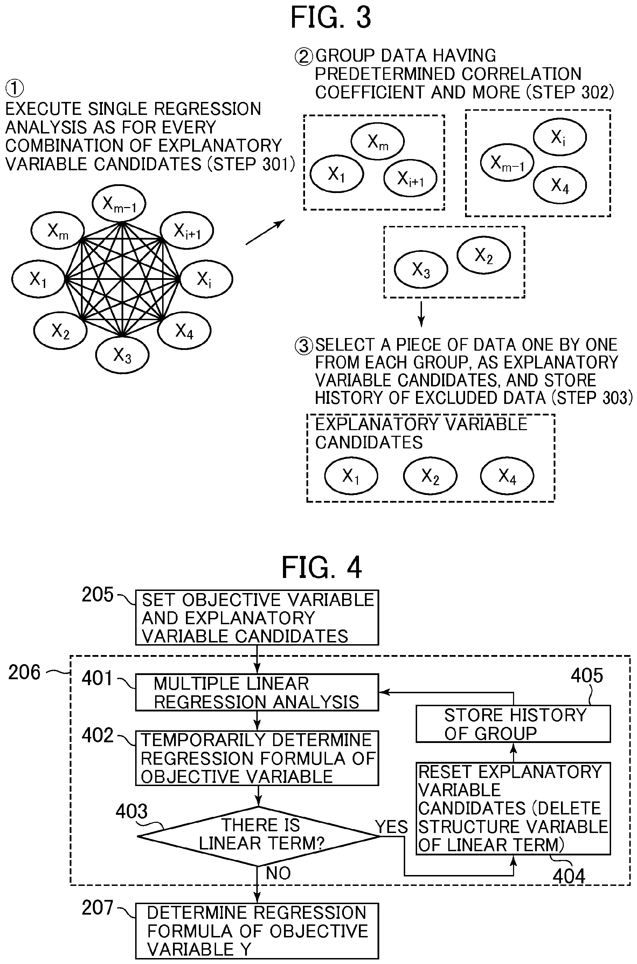

Then, the work improvement support device 100 sets the abovementioned KPI data as the objective variable Y and a predetermined number of the related data (X1, X2, X3, ... Xn, ... Xm) as the explanatory variable candidates, for example, in the storage device 101 (Step 205). Fig. 3 shows the detailed selecting method of the explanatory variable candidates in the abovementioned Step 205. The correlation coefficient calculating unit 115 of the work improvement support device 100 in this case executes a single regression analysis between the related data (X1, X2, X3, ... Xm), as for every combination of the related data (Step 301).

Further, the data group setting unit 113 groups the related data groups having a constant value and more of the correlation coefficient obtained through the abovementioned single regression analysis, as the same collinear group (Step 302). Further, the explanatory variable candidate selecting unit 114 arbitrarily selects one piece of related data in every group obtained in the abovementioned Step 302 and stores the above information in the storage device 101 as the explanatory variable candidates. Further, the explanatory variable candidate selecting unit 114 records the information of the related data not selected here in the storage device 101 as the collinear group linked with the respective explanatory variable candidates (Step 3). Taking Fig. 3 as an example, such the information that the collinear group of the "X1" includes the "Xm" and the "Xi+1" is recorded in the storage device 101.

Next, the multiple regression analysis unit 112 of the work improvement support device 100 performs a multiple regression analysis respectively on the abovementioned related data (Step 206) and calculates the regression formula of the objective variable Y (Step 207). As the result of the multiple linear regression analysis, assuming that "XA", "XB", and "XC" are extracted as the explanatory variables, the regression formula of the objective variable Y is shown in the following expression 4. Here, aA, aB, and aC indicate the coefficients of the respective explanatory variables and C indicates the constant. Here, in the expression of the first embodiment, the right side is defined as the cause and the left side is defined as the result.

$$Y = a_A X_A + a_B X_B + a_C X_C + C$$

$$----- \text{(Expression 4)}$$

Next, the work improvement support device 100 determines whether the regression formula calculated in the abovementioned Step 207 satisfies a predetermined completion condition (Step 208) .

On one hand, as the result of this determination, when the regression formula does not satisfy the completion condition (example: the related data predetermined by an operator is extracted as the explanatory variable, and the like) (Step 208: No), the work improvement support device 100 sets the explanatory variables XA, XB, and XC as the new objective variable Y and the related data (X1, X2, X3, ... Xn, ... Xm, where the objective variable itself is excluded) as the explanatory variable candidates, and estimates the respective regression formulas, according to the multiple linear regression analysis (Step 205) . Thus, by repeating the multiple regression analysis sequentially, the whole of the structural causal model related to the KPI data is estimated automatically.

On the other hand, as the result of the above determination, when the technology regression formula satisfies the completion condition (Step 208: Yes), the work improvement support device 100 finishes the multiple regression analysis on the working data and stores the estimated structural causal model (in short, the regression formulas of the respective data) in the storage device 101 (Step 209), hence to finish the processing.

On one hand, as mentioned above, in the conventional multiple linear regression analysis, the regression formula of the objective variable Y is expressed by the linear coupling of the explanatory variables. Accordingly, if a true causal relation is shown in the following expression 5 (that is, Y of the right side is the cause and XA of the left side is the result), when calculation is performed with the data Y as the objective variable, the expression 4 is derived. In other words, evaluation of a correlation relation is possible but the automatic estimation of the causal relation is difficult.

$$X_A = a_A^{-1} Y - a_A^{-1} a_B X_B - a_A^{-1} a_C X_C + a_A^{-1} C$$

$$----- \text{(Expression 5)}$$

On the other hand, in the first embodiment, when XA, XB, and XC have the nonlinear values of the original data Xa, Xb, and Xc (X1, ... Xa, ... Xb, ... Xc, ... Xn) extracted from the work control system 20, the expression 4 is shown by the following expression 6.

$$Y = a_A X_a^2 + a_B X_b^2 + a_C X_c^2 + C$$

$$----- \text{(Expression 6)}$$

Here, when the expression 6 is solved as for Xa, the expression 7 as shown below is obtained.

$$X_a = \sqrt{a_A^{-1} Y - a_A^{-1} a_B X_b^2 - a_A^{-1} a_C X_c^2 + a_A^{-1} C}$$

$$----- \text{(Expression 7)}$$

The right side of the expression 7 includes the square root, which is an unexperienced form in the work control of the social infrastructure. Even when using the work improvement support device 100, the multiple linear regression analysis cannot derive the expression 7 (in the work improvement support device 100, only the expression 6 can be derived from the multiple linear regression analysis). In other words, the work improvement support device 100 can uniquely specify the causal relation between the objective variable Y and the explanatory variables Xa, Xb, and Xc. Accordingly, in the first embodiment, the causal relation between the data can be accurately estimated automatically.

Further, in the first embodiment, since the nonlinear regression formula can be calculated on the basis of the multiple linear regression analysis, the structural causal model among the working data can be estimated at high precision and at ease.

Further, also in the first embodiment, when the regression formula includes a linear term, automatic estimation of the causal relation is difficult.

For example, it is difficult to automatically estimate which causal relation is right as for the expression 8 and the expression 9 (in short, of Y and Xa, which is the cause and which is the result), thereby requiring the operator's determination, on the basis of his or her work knowledge.

$$Y = a_A X_a + a_B X_b^2 + a_C X_c^2 + C$$

$$-----(\text{Expression 8})$$

$$X_a = a_A^{-1} Y - a_A^{-1} a_B X_b^2 - a_A^{-1} a_C X_c + a_A^{-1} C$$

$$-----(\text{Expression 9})$$

Then, to cope with this case, the first embodiment provides a function capable of easily modifying and updating the structural causal graph estimated by the work improvement support device 100 automatically, on the basis of the operator's work knowledge. The details of Step 206 in the flow of Fig. 2 will be hereinafter described using the flow of Fig. 4.

In this case, the multiple regression analysis unit 112 of the work improvement support device 100 executes a multiple regression analysis (Step 401), using the explanatory variable candidates set in Step 205 and calculates a temporary regression formula of the objective variable Y (Step 402). In the first embodiment, a stepwise backward regression method is adopted as the algorithm of the multiple regression analysis but it is not restricted to the above algorithm.

Next, the data group setting unit 113 of the work improvement support device 100 determines whether or not the temporary regression formula includes a linear term (Step 403).

As the result of this determination, when it is proved that the temporary regression formula includes a linear term (Step 403: Yes), the data group setting unit 113 defines the objective variable Y and the explanatory variable (taking the expression 8 as an example, Xa) comprising the linear term as the same causal group, excludes Xi from the explanatory variable candidates (Step 404), and shifts the processing to Step 401.

Further, the data group setting unit 113 stores the history of the data excluded in Step 404 as the causal group of the objective variable Y, in the storage device 101 (Step 405). Taking the expression 8 as an example, such the information that the causal group of Y includes Xa is recorded in the storage device 101.

Taking the expression 8 as an example, the multiple linear regression analysis finally derives the expression 10 as the regression formula of the objective variable Y.

$$Y = a_B X_b^2 + a_C X_c^2 + a_A a_D X_d^2 + a_A a_E X_e^2 + C + a_A C'$$

$$-----(\text{Expression 10})$$

Here, the true regression formula of Xa is assumed in the following expression 11.

$$X_a = a_D X_d^2 + a_E X_e^2 + C'$$

$$-----(\text{Expression 11})$$

The Xd and Xe are original data (X1, ... Xd, ... Xe, ... Xn) extracted from the work control system 20.

Similarly to the expression 6, the inverse function of the expression 10 includes the square root in the right side (cause) as for any explanatory variable, into an unexperienced form in the work control of the social infrastructure.

Further, even if using the work improvement support device 100, the multiple linear regression analysis cannot derive the inverse function of the expression 10.

In the work improvement support device 100, only the expression 10 can be derived from the multiple linear regression analysis. Accordingly, although the derived regression formula (expression 10) does not include the information of the data Xi, it is possible to automatically estimate the causal relation between the data correctly in the work improvement support device 100.

The work improvement support device 100 determines the presence and absence of a linear term in the regression formula obtained by the multiple linear regression analysis. When a linear term is included, the above device defines the objective variable Y and the explanatory variable (taking the expression 8 as an example, Xa) comprising the linear term as the same causal group and excludes the same explanatory variable from the explanatory variable candidates. By repeating re-selection of the explanatory variable candidate and the multiple regression analysis sequentially, the above device derives the regression formula of the objective variable Y not including the linear term. Although the information of the data (taking the expression 8 as an example, Xa) belonging to the same causal group as that of the objective variable Y is not included in the regression formula, the work improvement support device 100 can automatically estimate the causal relation between the data correctly.

Upon completion of the automatic estimation of the structural causal model on the basis of the abovementioned procedures, the work improvement support device 100 displays the estimated structural causal model on the display device 104, on the basis of the information stored in the storage device 101.

The storage device 101 of the work improvement support device 100 records the causal expressions and the explanatory variables linked with the respective working data 4. The work improvement support device 100 displays the whole structural causal model on the display device 104, by tracking back the causal relation with the KPI data as a starting point.

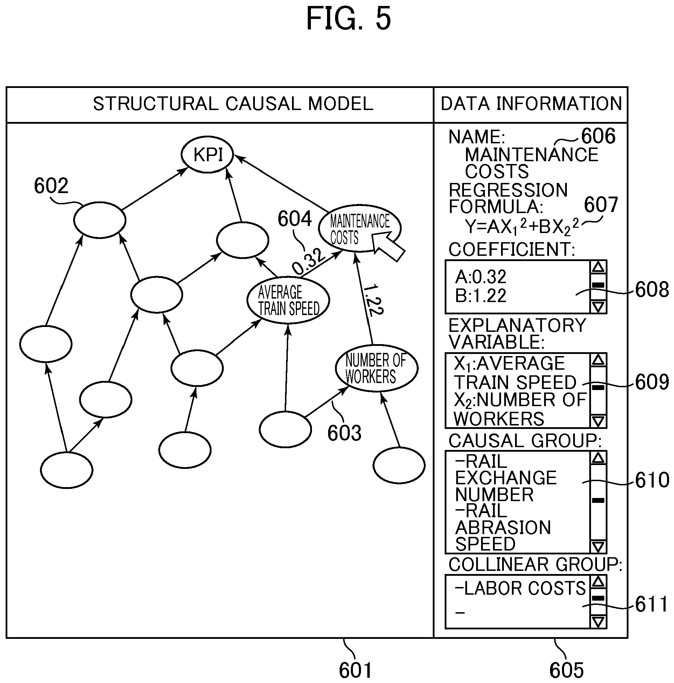

Fig. 5 shows a display example of the structural causal model 601. In the structural causal model 601, each apex 602 (node) expresses the working data 4 used in the abovementioned multiple regression analysis. Further, the data in the causal relation with respective working data 4 (in short, a relation between the objective variable and the explanatory variable) is coupled by a notation 603 (edge) such as arrow and the like. The direction of this arrow 603 indicates the direction from the explanatory variable (cause) to the objective variable (result).

The work improvement support device 100 can display the name of the corresponding working data 4 in each apex 602, on the basis of the information stored in the storage device 101 linked with the respective working data 4, to help an operator understand this structural causal model 601. Further, the work improvement support device 100 can display a coefficient 604 of the corresponding regression formula, in the vicinity of each arrow 603.

It is assumed that an operator viewing the structural causal model 601 selects some apex 602 or the working data 4, using the input interface 105. The group information displaying unit 117 of the work improvement support device 100 displays the details 605 of the working data 4 together with a display column of the structural causal model 601, on the basis of the information stored in the storage device 101 linked with the working data 4 selected by the operator.

The details 605 of the data include a working data name 606 indicating the working data 4 selected by the operator and a display 607 of its regression formula. Further, the display 607 of the regression formula includes a display 608 of the coefficients and a display 609 of the explanatory variables.

The abovementioned operator can extract the most dominant key in determination of the KPI, by confirming the displayed structural causal model 601 and regression formula 607 in respective working data (for example, an explanatory variable having a large coefficient 604 can be determined as the most influential factor to the KPI and therefore, the corresponding to the explanatory variable or the working data can be determined as a key).

Here, in the abovementioned details 605 of the data, the work improvement support device 100 displays a list 610 of the working data belonging to the same causal group, on the basis of the information stored in the storage device 101 linked with the working data 4 selected by the operator. The work improvement support device 100 further displays a list 611 of the working data belonging to the collinear group, in the details 605 of the data.

Alternatively, the display form of the details 605 of the data is not restricted to the example shown in Fig. 5 but a form of showing the above in the vicinity of each apex 602 or a form of showing the above in a list in another screen using a tub and the like may be used. Hereinafter, these display forms will be described using the drawings.

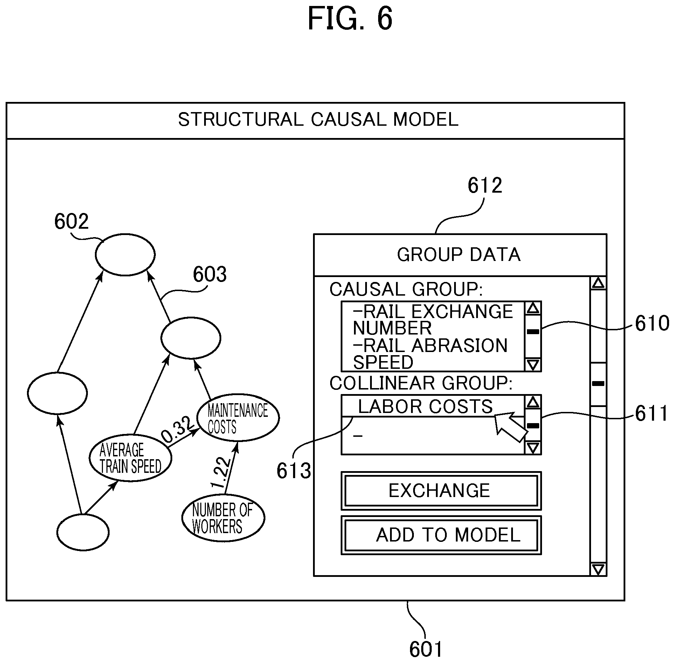

In the structural causal model 601 of Fig. 6, when an operator selects some apex 602 of the structural causal model 601, using the input interface 105, the causal group display 610 and the collinear group display 611 are displayed as a pop-up 612.

In this case, an operator further selects a data name 613 described within the group displays 610 and 611; upon receipt of this selection operation, the work improvement support device 100 exchanges data between the apexes 602 and adds data to the structural causal model 601.

In the structural causal model 601 of Fig. 6, although only the causal group display 610 and the collinear group display 611 are displayed in the pop-up 612, the detailed display 605 of the data shown in Fig. 5 may be all displayed on the pop-up 613, on the basis of the information stored in the storage device 101 linked with the selected working data 4. According to this, when an operator does not select any apex 602, the detailed information is not displayed and the structural causal model 601 can be displayed large on the same screen, so that the operator can understand the structural causal model 601 easily.

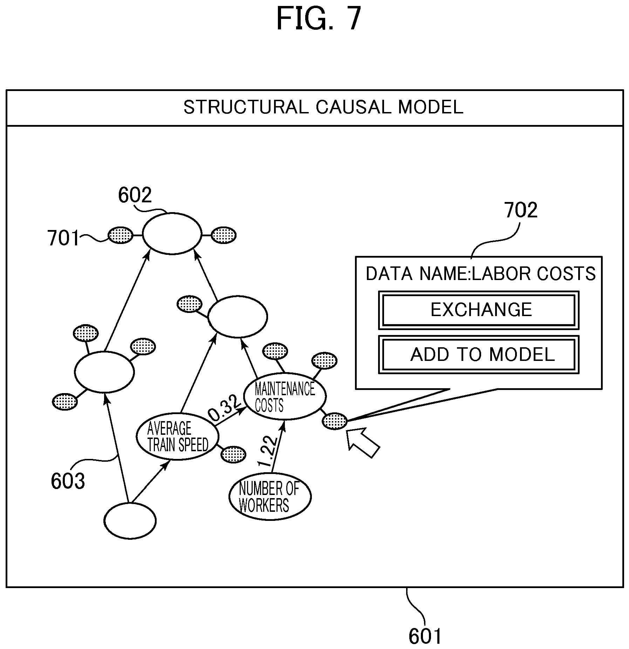

In the structural causal model 601 of Fig. 7, the working data (hereinafter, the group data) 701 belonging to the same causal group and collinear group is shown together around each apex 602.

In the structural causal model 601 of Fig. 7, the group data 701 and the respective apexes 602 are distinguished in color and size; however, it is not restricted to this. When some apex 602 contains large group data 701, there is a high possibility that the structural causal around the apex 602 needs to be modified by hand. Accordingly, in the display form shown in Fig. 7, the work improvement support device 100 shows all or a part of the group data 701 around the apex 602, so that an operator, viewing this, can find a position that would need to be modified at a glance. When an operator selects the group data 701 using the input interface 105, the work improvement support device 100 displays the detail information such as data name and the like as the pop-up 702. Further, the operator can select the exchange of the data between the apexes 602 and the addition of the data to the structural causal model 601 in the pop-up 702.

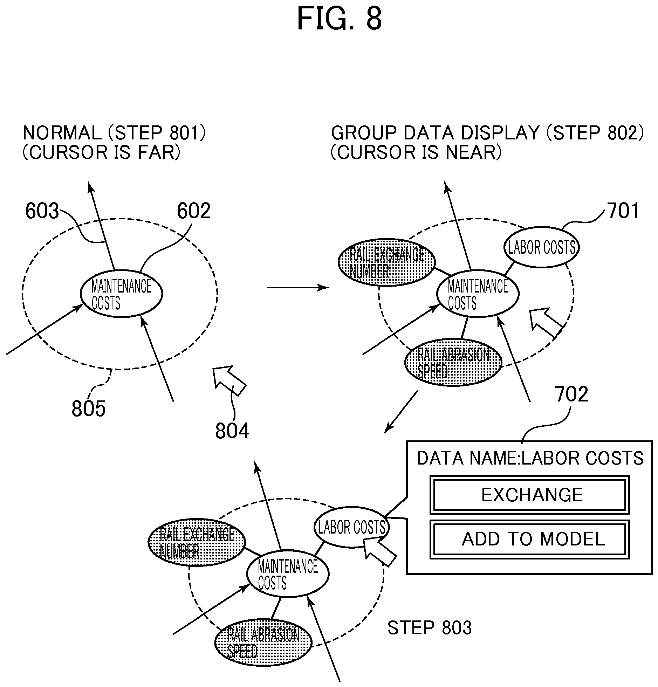

Further, Fig. 8 shows an operation example related to a similar example of the display form shown in Fig. 7. In this case, similarly to the case of Fig. 7, it shows the processing that the work improvement support device 100 displays the group data 701 together around the respective apexes 602.

In this case, the group information displaying unit 117 of the work improvement support device 100 determines whether a cursor 804 an operator operates through the input interface 105 is within a range 805 of a predetermined distance, around one of the respective apexes 602, in respective predetermined amount of time. On one hand, in the normal mode, in other words, when the cursor 804 an operator operates through the input interface 105 is at a distance from an apex 602 (Step 801), the group information displaying unit 117 of the work improvement support device 100 does not change the display form but displays the respective apexes 602 normally, without any description around the respective apexes 602.

On the other hand, when the cursor 804 approaches a certain apex 602 and comes into a predetermined distance range 805, the group information displaying unit 117 of the work improvement support device 100 displays the group data 701 around the above apex 602 (Step 802).

Further, when an operator selects the group data 701 using the cursor 804, the group information displaying unit 117 of the work improvement support device 100 displays the detailed information such as data name and the like as the pop-up 702, similarly to Fig. 7.

When the work improvement support device 100 performs this display form and display control, an operator can select the exchange of the apex 602 with another apex of the working data belonging to the corresponding group and the addition of the data to the structural causal model 601. When the working data 4 are large and the work improvement support device 100 generates a complicated structural causal model 601, display becomes complicated, with the group data 701 always displayed around the respective apexes 602 as shown in Fig. 7. This case may avoid an operator from understanding the structural causal model 601.

In the example of Fig. 8, by not displaying the group data 701 normally, even a complicated structural causal model 601 can be easy for an operator to understand. Simultaneously, an operator can confirm a position that would need to be modified, at ease. In the example shown in Fig. 8, color of the group data 701 is changed according to which group of the causal group and the collinear group it belongs to, to support the operator's understanding; however, this is not restrictive.

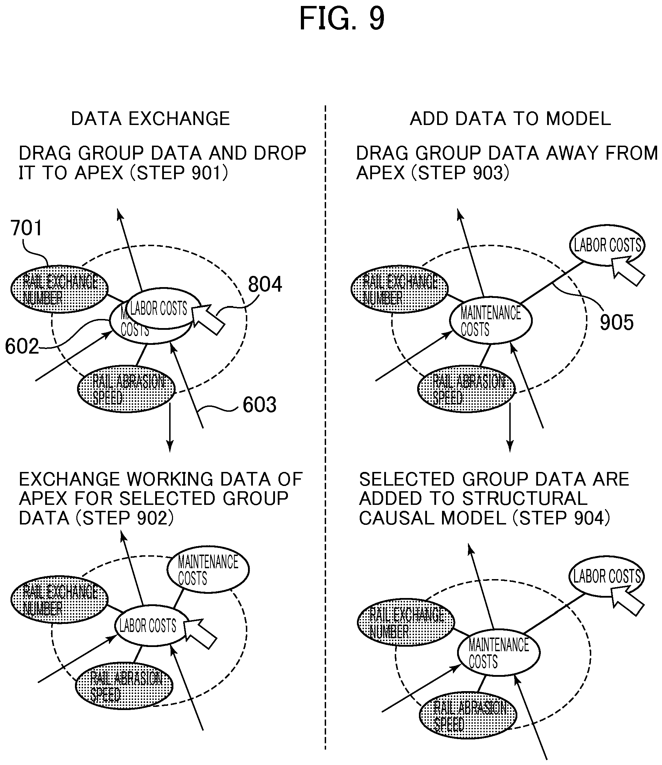

Fig. 9 shows one example of a step enabling an instinctive operation, as for data exchange between the apex 602 and the group data 701 and addition of the group data 701 to the structural causal model 601, in the display examples of the group data 701 shown in Figs. 7 and 8.

At first, here, the step of the data exchange between the apex 602 and the group data 701 will be described. It is assumed that an operator operates the cursor 804 through the input interface 105, selects and drags the group data 701 described in the vicinity of the apex 602, and drops the above on the apex 602.

The group information displaying unit 117 of the work improvement support device 100 detects this operation event (Step 901), to exchange the group data 701 selected by the operator for the apex 602 (Step 902). When the data are exchanged, the structural causal model 601 needs to be adjusted about the structural causality around the exchanged apex 602. In other words, the operator has to adjust the regression formula with the exchanged apex 602 as the objective variable and the coefficients of the regression formula with the apex 602 as the explanatory variable. As this adjustment method, there are a method in which an operator determines a coefficient and inputs the above through the input interface 105 and a method of updating the coefficient using a multiple regression analysis function (Step 401) of the work improvement support device 100.

Further, the step of adding the group data 701 to the structural causal model 601 will be described. It is assumed that an operator operates the cursor 804 through the input interface 105, selects and drags the group data 701 described in the vicinity of the apex 602, and shifts the above away from the apex 602. The work improvement support device 100 detects this (Step 903) and determines whether a distance between the group data 701 selected by the operator and the apex 602 arrives at a predetermined value; when the distance arrives at the predetermined value, it cuts off a line 905 visually coupling the apex 602 and the group data 701 and adds the selected group data 701 to the structural causal model 601.

As mentioned above, when the group data 701 are newly added to the structural causal model 601, the structural causal model 601 needs to be adjusted about the structural causal around the added apex 602. In other words, an operator sets an explanatory variable of the added apex 602 and an objective variable with the apex 602 defined as the explanatory variable.

Further, an operator adjusts the regression formula with the added apex 602 as the objective variable and the coefficient of the regression formula with the apex 602 as the explanatory variable. As the adjustment method, there are a method in which an operator determines a coefficient and inputs the above through the input interface 105 and a method of updating the coefficient using the multiple regression analysis function (Step 401) of the work improvement support device 100.

As mentioned above, according to Fig. 9, it is possible to modify the structural causal model 601 at ease according to a more instinctive operation.

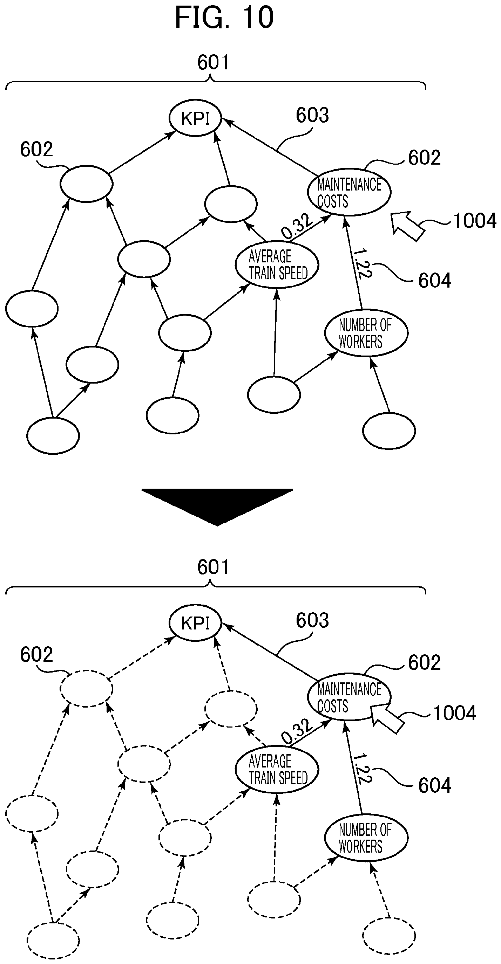

Alternatively, like the structural causal model 601 shown in Fig. 10, the group information displaying unit 117 of the work improvement support device 100 may perform, on a target apex 602 for approach of a cursor 1004 by an operator, a display control of specifying only the information of the other apexes 602 directly coupled to the relevant apex 602 by the edges 604, that is, at least about one of the objective variable and the explanatory variable. In the example of Fig. 10, of the apexes 602 and the edges 604, only the ones to be specified are displayed as a solid line and the others are displayed as a dashed line.

By performing this display control, the context relation in the apex 602 (node) selected by an operator, in other words, only the explanatory variable and the objective variable as for the above apex 602 are effectively emphasized in the structural causal model 601, so that an operator can be blessed with the improvement in visibility of a complicated structural causal model 601.

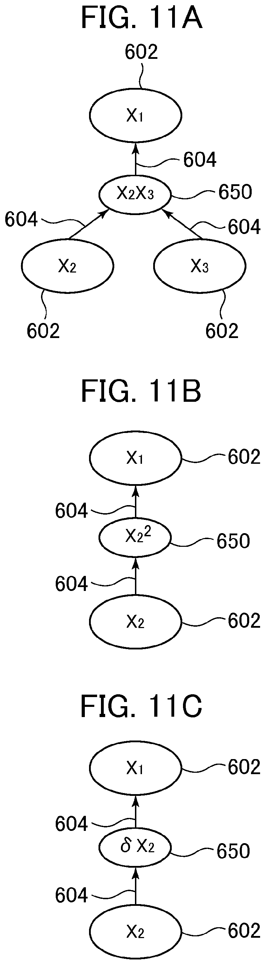

Further, the group information displaying unit 117 may perform a display control of arranging the information about a relationship among the respective apexes 602 or the regression formula of defining the relation among the data, between the apexes 602, as a new apex 650, as shown in Figs. 11A to 11C.

By performing this display control by the group information displaying unit 117, an operator can easily understand a nonlinear structure in the structural causal model 601. In the case of not using the form of displaying this apex 650, an operator cannot visually understand how, for example, the working data "X1" corresponding to the apex 602 is coupled to the working data "X2" and "X3" linked by the edges 604. For example, an operator cannot distinguish whether it is in the relation of "X1 = dX2 / dt + dX3 / dt", in the relation of "X1 = X2 × X3", or in the relation of "X1 = X22 + X32, ...".

According to the abovementioned first embodiment, by using the nonlinear relation between the working data, automatic estimation of a structural causal model according to the multiple linear regression analysis is enabled even when the precedence over time information of the working data is not clear.

Further, with respect to the working data difficult to estimate a causal relation according to the multiple linear regression analysis because the regression formula includes a linear term, the above working data and the other working data (explanatory variable) comprising the linear term are defined as the same causal group and the above explanatory variable is excluded from the explanatory variable candidates, hence to enable the automatic estimation of a correct structural causal model according to the multiple linear regression analysis. Further, by showing clearly the above working data and the other working data belonging to the same causal group to an operator, only some limited data are focused on the automatically estimated structural causal model and the automatically estimated structural causal model can be easily and correctly modified and updated.

Further, in the case where the estimation of a structural causal model according to the multiple linear regression analysis is difficult because there is a multicollinearity among the working data, a single regression analysis between the working data is performed in all the combinations and each data group having a constant correlation coefficient and more is defined as the same collinear group, one piece of data is arbitrarily selected in every group and added to the explanatory variable candidates, hence to enable the automatic estimation of a structural causal model according to the multiple linear regression analysis.

Further, by showing clearly the respectively selected data and the other working data belonging to the same collinear group to an operator, when there is another data to be truly selected, the operator can find the above data easily, hence to modify and update the automatically estimated structural causal model more correctly.

According to the abovementioned effects, in a social infrastructure, it is possible to estimate a structural causal model among the working data at high precision and at ease and plan work improvement policies properly and easily.

--- Second Embodiment ---

A second embodiment shown hereinafter is to enable easy and accurate estimation of a causal relation between the working data 4 accumulated by the work control system 20, on the basis of the structure of each data table storing the working data 4. Here, the device configuration of the work improvement support device 100 is the same as that in the first embodiment and its description is omitted.

Similarly to the first embodiment, the second embodiment will be hereinafter described using the automatic estimation flow (Fig. 2) of a structural causal model in the work improvement support device 100.

An operator in this case analyzes a causal relation between the working data 4 accumulated by the work control system 20 and tries to plan work improvement policies properly.

It is assumed that the operator pushes down a predetermined button (example: a list display button of the working data) on the screen of the display device 104, according to the operation of the input interface 105. In this case, the information obtaining unit 110 of the work improvement support device 100 obtains all the working data 4 stored in the work control system 20 and displays the list information on the display device 104 (Step 201). The abovementioned operator selects one piece of data that becomes KPI (taking a railway maintenance as an example, the maintenance costs and the like) (hereinafter, the KPI data) from a list of the displayed working data 4. Here, the information obtaining unit 110 of the work improvement support device 100 receives the selection of the KPI data (Step 202).

When the KPI data are selected by an operator as mentioned above, the information obtaining unit 110 of the work improvement support device 100 automatically extracts the working data related to the KPI data (hereinafter, the related data) from all the working data 4 stored in the work control system 20, according to a predetermined algorithm, and stores the above in the storage device 101 (Step 203). In the second embodiment, it is assumed that n pieces of the related data (X1, X2, X3, ... Xn) are extracted from the work control system 20.

Further, the data distance setting unit 116 of the work improvement support device 100 in the second embodiment calculates each distance (data distance) of the respective related data from the KPI data and stores the above in the storage device 101, in Step 203.

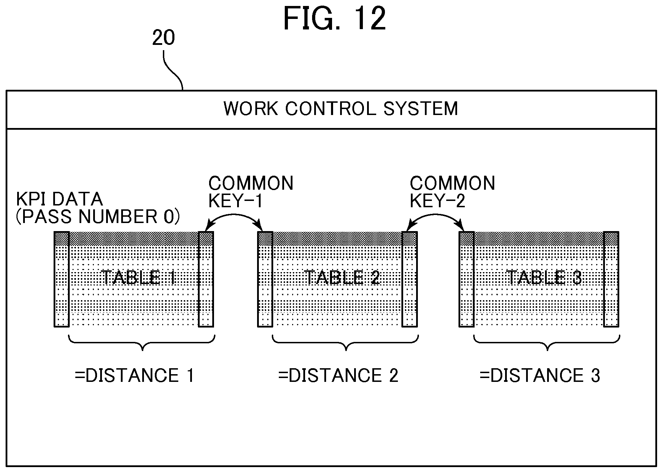

A method of defining the data distance in the second embodiment will be described using Fig. 12. Fig. 12 is an ER view of the working data 4 accumulated by the work control system 20. The work improvement support device 100 in the second embodiment defines the related data included in the same data table (table 1) as the KPI data, as a distance "1", the related data included in the table (table 2) containing the common key (for example, time and date and the like) with the table 1, as a distance "2", the related data included in the table (table 3) containing the common key with the table 2, as a distance "3", and the like.

Step 204 is similar to that of the first embodiment and therefore, the description is omitted. Next, the work improvement support device 100 sets the KPI data as the objective variable Y and the related data (X1, X2, X3, ... Xn, ... Xm) as the explanatory variable candidates (Step 205), similarly to the first embodiment.

As shown in Fig. 3, the work improvement support device 100 in this Step 205 performs a single regression analysis between the related data (X1, X2, X3, ... Xm), in every combination of the related data (Step 301) and groups the data group exceeding a predetermined correlation coefficient as the same collinear group (Step 302). Further, the work improvement support device 100 arbitrarily selects one piece of data in every group and adds the above to the explanatory variable candidates. Further, the work improvement support device 100 records the data not selected in the above as the collinear group linked with the respective explanatory variable candidates, in the storage device 101 (Step 303).

Further, the explanatory variable candidate selecting unit 114 of the work improvement support device 100 excludes the data having a shorter distance than the distance the objective variable Y has, from the explanatory variable candidates, on the basis of the distance information of the respective data stored in the storage device 101. In short, the above unit excludes the data supposed to become the cause of the objective variable Y (supposed to have a long distance and a lower relationship with the KPI data) and supposed not to be the result (supposed to have a shorter distance and a higher relationship with the KPI data).

As mentioned above, the work improvement support device 100 in the second embodiment uses only the working data that can be the cause of the objective variable Y as the explanatory variable candidates, for the multiple linear regression analysis. Accordingly, Steps 403, 404, and 405 shown in Fig. 4 are unnecessary, thereby enabling the automatic extraction of a structural causal graph for a shorter time. Further, an operator's trouble to modify and update the structural causal graph can be reduced.

--- Third Embodiment ---

In the third embodiment, there will be described a technology capable of estimating a causal relation between the respective working data 4 accumulated by the work control system 20, at high precision and at ease, on the basis of the name of the working data 4. Here, the device configuration of the work improvement support device 100 in the third embodiment is similar to that of the first embodiment and its description is omitted.

Similarly to the second embodiment, the explanatory variable candidate selecting unit 114 of the work improvement support device 100 in the third embodiment excludes the data having a shorter distance than the distance the objective variable Y has, from the explanatory variable candidates, on the basis of the distance information of the respective data stored in the storage device 101, in Step 205 shown in the flow of Fig. 2.

In short, the above unit excludes the data supposed to become the cause of the objective variable Y (supposed to have a longer distance and a lower relationship with the KPI data) and supposed not to be the result (supposed to have a shorter distance and a higher relationship with the KPI data). Here, the second embodiment defines the distance of the related data from the KPI data, on the basis of the structure of the data table the work control system 20 has; the third embodiment, however, defines the distance of the data on the basis of the data name.

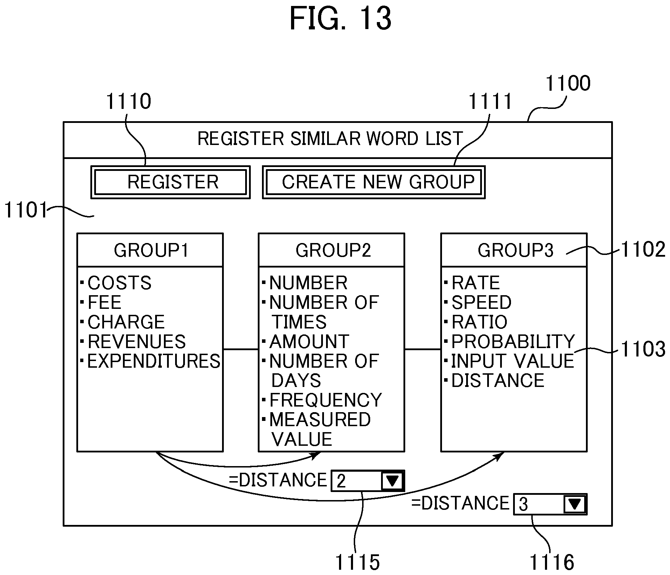

Here, an operator has to register a similar word list 1161 previously in the work improvement support device 100. Fig. 13 shows an example of a registration screen 1100 of the similar word list 1161.

In this registration screen 1100, an operator creates the similar word list 1161 using the input interface 105 and pushes down the registration button 1110, hence to register the above list in the work improvement support device 100. In reply to this, the work improvement support device 100 stores the similar word list 1161 in the storage device 101.

An operator adds key words 1103 determined to be similar or identical, to the respective key word groups 1102. Further, an operator can add and create a new group by pushing down a new group creation button 1111.

Further, an operator sets each distance between the respective groups, on the basis of his or her determination, for example, according to a proper selecting operation of the interface such as pull-down menus 1115 and 1116 and the like. In the example of Fig. 13, an operator sets the distance between the group 1 and the group 2 as "2" and the distance between the group 1 and the group 3 as "3".

Similarly to the abovementioned first and second embodiments, a flow of automatic estimation of the structural causal model by the work improvement support device 100 will be hereinafter described using Fig. 2.

An operator in this case analyzes the causal relation between the working data 4 accumulated by the work control system 20 and tries to extract a key for the KPI improvement and to plan work improvement policies properly.

Then, it is assumed that the abovementioned operator pushes down a predetermined button (example: a list display button of the working data) on the screen of the display device 104, using the input interface 105. Upon receipt of this, the information obtaining unit 110 of the work improvement support device 100 obtains the information of all the working data 4 stored in the work control system 20 and displays the list information on the display device 104 (Step 201). On the other hand, the above operator views the list information of the working data on the display device 104 and selects one piece of data that becomes KPI (taking a railway maintenance as an example, the maintenance costs and the like) (hereinafter, the KPI data) from the list. The information obtaining unit 110 of the work improvement support device 100 receives this selection (Step 202).

When an operator selects the KPI data as mentioned above, the information obtaining unit 110 of the work improvement support device 100 automatically extracts the working data related to the KPI data (hereinafter, related data) from all the working data 4 stored in the work control system 20, according to a predetermined algorithm and stores the above in the storage device 101 (Step 203). In the third embodiment, it is assumed that n pieces of the related data (X1, X2, X3, ... Xn) are extracted from the work control system 20.

Similarly to the second embodiment, in Step 203, the data distance setting unit 116 of the work improvement support device 100 calculates a distance (data distance) of the respective related data 4 from the KPI data and stores the above values in the storage device 101.

A method of calculating the data distance in the third embodiment will be hereinafter described. The key word determining unit 1162 of the work improvement support device 100 determines which key word 1103 of the similar word list 1161 is included in the KPI data and the name (column name) of the respective related data, using the natural language processing and the like.

Further, the data classifying unit 1163 of the work improvement support device 100 classifies the related data in every group 1102 to which the above key word 1103 belongs. The data classifying unit 1163 of the work improvement support device 100 sets the related data belonging to the same key word group 1102 as the KPI data as the distance "1", the related data belonging to the key word group 1102 of the distance "2" as the distance "2", and the related data belonging to the key word group 1102 of the distance "3" as the distance "3". Here, Step 204 is similar to that of the first embodiment and its description is omitted.

Next, similarly to the first embodiment, the explanatory variable candidate selecting unit 114 of the work improvement support device 100 sets the KPI data as the objective variable Y and the related data (X1, X2, X3, ... Xn, ... Xm) as the explanatory variable candidates (Step 205). As shown in Fig. 3, in the abovementioned Step 205, the explanatory variable candidate selecting unit 114 of the work improvement support device 100 performs a single regression analysis between the respective related data (X1, X2, X3, ... Xm) in every combination of the related data (Step 301) and groups the data group exceeding a predetermined correlation coefficient as the same collinear group (Step 302).

Further, the explanatory variable candidate selecting unit 114 arbitrarily selects one piece of data in every group and excludes the other from the explanatory variable candidates. Further, the explanatory variable candidate selecting unit 114 records the not-selected data in the storage device 101, as the collinear group linked with the respective explanatory variable candidates (Step 303).

Further, the explanatory variable candidate selecting unit 114 of the work improvement support device 100 excludes the related data having a shorter distance than the distance the objective variable Y has, from the explanatory variable candidates, on the basis of the distance information of the respective related data stored in the storage device 101. In short, the above excludes the related data supposed to become the cause of the objective variable Y (supposed to have a longer distance and a lower relationship with the KPI data) but not supposed to be the result (supposed to have a shorter distance and a higher relationship with the KPI data).

As mentioned above, the work improvement support device 100 in the third embodiment uses only the working data that can be the cause of the objective variable Y as the explanatory variable candidates, for the multiple linear regression analysis. Accordingly, Steps 403, 404, and 405 shown in Fig. 4 are unnecessary, thereby enabling the automatic extraction the structural causal graph for a shorter time. Further, an operator's trouble to modify and update the structural causal graph can be reduced.

According to the third embodiment, even when the work control system 20 controls the working data 4 with one table, Steps 403, 404, and 405 shown in Fig. 4 become unnecessary and the structural causal graph can be automatically extracted for a shorter time. Further, it is possible to reduce the operator's trouble to modify and update the structural causal graph.

As mentioned above, although the best modes for carrying out the invention have been described specifically, the invention is not restricted to the above but various modifications without departing from its spirit is possible.

According to the present embodiments, it is possible to estimate a causal relation between predetermined data at high precision and at ease, taking the nonlinearity between the above data into consideration.

In the description of this specification, at least the following will be cleared. Specifically, in the work improvement support device of each embodiment, the user interface of displaying the estimated structural causal model may include the group information displaying unit of displaying the information of the working data belonging to the same group, as for respective working data.

According to this, a user as a person in charge of the work improvement can confirm the grouped data as mentioned above on the user interface, to make predetermined such as selection of the explanatory variable properly accurate.

Further, the work improvement support device in each embodiment may further include the correlation coefficient calculating unit for calculating a correlation coefficient as for at least one combination of the working data. The data group setting unit may set together the working data having the calculated correlation coefficient exceeding a predetermined threshold as the same group; the explanatory variable candidates selecting unit may select a piece of working data one by one from the respective groups including the working data having the correlation coefficient exceeding the predetermined threshold, as the explanatory variable candidates for the multiple linear regression analysis; and the group information displaying unit of the user interface may display the information of the working data belonging to the same group, as for respective working data.

According to this, as for the excluded data, taking a so-called multicollinearity into consideration, the information, including the group, can be presented to a user and can be an object to be determined by the user.

Further, the work improvement support device in each embodiment may further include the data distance setting unit for setting a distance between the working data, as for each space between the working data. The explanatory variable candidates selecting unit may select the working data having a longer distance than the objective variable as the explanatory variable candidates for the multiple linear regression analysis.

According to this, only the working data that can be the cause of the objective variable are used for the multiple linear regression analysis as the explanatory variable candidates, which enables the automatic extraction of the structural causal graph efficiently. Further, the user's trouble to modify and update the structural causal graph can be reduced.

Further, in the work improvement support device of each embodiment, the data distance setting unit may determine a distance between the working data, on the basis of the data table structure of the working data.

According to this, only the working data that can be the cause of the objective variable are used for the multiple linear regression analysis as the explanatory variable candidates, which enables the automatic estimation of the structural causal graph efficiently.

Further, in the work improvement support device of each embodiment, the data distance setting unit may include the similar word list in which the key word groups determined as the similar or identical groups are described in every group, the key word determining unit for determining whether the name of the working data includes a key word described in the similar word list, and the data classifying unit for classifying the working data in every belonging table of the key word determined to be included in the working data according to the above determination, hence to determine a distance between the respective working data, on the basis of the result of the classification.

According to this, only the working data that can be the cause of the objective variable are used as the explanatory variable candidates for the multiple linear regression analysis, which enables the automatic extraction of the structural causal graph efficiently.

Further, in the work improvement support device of each embodiment, the group information displaying unit may display the information of the working data belonging to the same group, as for respective working data and receive a user's instruction for setting the other working data belonging to the group, instead of the selected one piece of working data, as a selection target.

According to this, a user and the like having the knowledge can easily determine the exchange of the proper piece of working data as the explanatory variable with that one piece of selected working data on the side of the work improvement support device.

Further, in the work improvement support device of each embodiment, the group information displaying unit may display a node corresponding to the selected one piece of working data and a node corresponding to the other piece working data belonging to the group in combination, in the structural causal model, when displaying the information of the working data belonging to the same group, as for respective working data.

According to this, it is possible to visually confirm the nodes belonging to the same group, of the respective nodes in the structural causal model, without any special user's operation.

Further, in the work improvement support device of each embodiment, displaying the information of the working data belonging to the same group, as for respective working data, the group information displaying unit may display a node corresponding to the other piece of working data belonging to the group, when predetermined instructing means in the user interface approaches the node corresponding to the selected one piece of working data within a predetermined distance range.

This makes it possible, in a complicated structural causal model including a lot of nodes, to control not to display the information of the respective working data belonging to the group normally but to display the information only at a user's desired time, hence to maintain a good visibility of the structural causal model.

Further, in the work improvement support device of each embodiment, the group information displaying unit may display a node corresponding to the selected one piece of working data and a node corresponding to the other piece of working data belonging to the same group in combination, in the structural causal model, when displaying the information of the working data belonging to the same group, as for respective working data, receive a user's instruction for shifting the node corresponding to the other piece of working data to a display position of the node corresponding to the selected one piece of working data, and set the other piece of working data, instead of the selected one piece of working data, as the selection target, when receiving a user's instruction for making the node corresponding to the one piece of working data away from the node corresponding to the other piece of working data.

According to this, a user can easily perform the selection and non-selection of the working data as the explanatory variables, according to the operation of the user interface on the GUI.

Further, in the work improvement support device of each embodiment, the group information displaying unit may display a node corresponding to the other piece of working data directly coupled by the edge in the structural causal model, in a predetermined form, as for predetermined piece of working data receiving the user's instruction.

This makes it possible, in a complicated structural causal model having a lot of nodes, to control to display the information about the other node or the working data having a predetermined causal relation, only as for a user's desired node, hence to maintain a good visibility of the structural causal model.

Further, in the work improvement support device of each embodiment, the group information displaying unit may further arrange a node indicating the information of the regression formula about the space of the corresponding working data, between the nodes corresponding to the respective working data in the structural causal model, when displaying the estimated structural causal model.

This makes it possible to clearly show the information of the regression formula specified about the space of the respective nodes or the working data to a user. A user can examine a relationship between the respective nodes with reference to the above regression formula.

[List of Reference Signs]

| | |
|---|---|
| 1: | NETWORK |
| 4: | WORKING DATA |
| 5: | WORKING DATA GROUP |
| 20: | WORK CONTROL SYSTEM |
| 30: | SUBSYSTEM |
| 100: | WORK IMPROVEMENT SUPPORT DEVICE |
| 101: | STORAGE DEVICE |
| 102: | PROGRAM |
| 103: | PROCESSOR |
| 104: | DISPLAY DEVICE |
| 105: | INPUT INTERFACE |
| 106: | COMMUNICATION DEVICE |
| 110: | INFORMATION OBTAINING UNIT |
| 111: | NONLINEAR TERM ADDING UNIT |
| 112: | MULTIPLE REGRESSION ANALYSIS UNIT |
| 113: | DATA GROUP SETTING UNIT |
| 114: | EXPLANATORY VARIABLE CANDIDATE SELECTING UNIT |
| 115: | CORRELATION COEFFICIENT CALCULATING UNIT |

116:    DATA DISTANCE SETTING UNIT
1161:   SIMILAR WORD LIST
1162:   KEY WORD DETERMINING UNIT
1163:   DATA CLASSIFYING UNIT
117:    GROUP INFORMATION DISPLAYING UNIT

**Claims**

1. A work improvement support device for estimating a structural causal model among predetermined working data on the basis of the working data, comprising:

   a nonlinear term adding unit for calculating a nonlinear value as for the working data and adding the nonlinear value to the working data;
   a multiple regression analysis unit for calculating a regression formula as for the respective working data according to multiple linear regression analysis;
   a data group setting unit for determining whether there is a linear term in the calculated regression formula and setting predetermined data comprising the linear term and an objective variable of the regression formula as a same group; and
   an explanatory variable candidate selecting unit for selecting the working data excluding the predetermined data as explanatory variable candidates for multiple linear regression analysis.

2. The work improvement support device according to claim 1, further comprising a user interface for displaying the estimated structural causal model, wherein
   the user interface includes a group information displaying unit for displaying information of the working data belonging to the same group, as for the respective working data.

3. The work improvement support device according to claim 2, further comprising a correlation coefficient calculating unit for calculating a correlation coefficient as for at least one combination of the working data, wherein
   the data group setting unit sets together the working data having the calculated correlation coefficient exceeding a predetermined threshold as the same group,
   the explanatory variable candidate selecting unit arbitrarily selects a piece of working data one by one from each group including the working data having the correlation coefficient exceeding the predetermined threshold, as the explanatory variable candidates for the multiple linear regression analysis, and wherein
   the group information displaying unit of the user interface displays the information of the working data belonging to each of the same groups, as for the respective working data.

4. The work improvement support device according to claim 2, further comprising a data distance setting unit for setting a distance between the working data, as for each space of the working data, wherein
   the explanatory variable candidate selecting unit selects the working data having a longer distance than the objective variable, as the explanatory variable candidates for the multiple linear regression analysis.

5. The work improvement support device according to claim 4, wherein
   the data distance setting unit determines a distance of each space between the working data, on the basis of a data table structure of the working data.

6. The work improvement support device according to claim 4, wherein the data distance setting unit comprises a similar word list in which key word groups determined as each similar or identical group are described in every group, a key word determining unit for determining whether a name of the working data includes a key word described in the similar word list, and a data classifying unit for classifying the working data in every belonging table of the key word determined to be included in the working data according to the abovementioned determination, and wherein the data distance setting unit determines a distance of each space between the working data on the basis of the result of the classification.

7. The work improvement support device according to claim 3, wherein
   the group information displaying unit displays the information of the working data belonging to the same group, as for the respective working data and receives a user's instruction for making the other piece of working data belonging to the group, instead of the selected one piece of working data, as the selection target.

**8.** The work improvement support device according to claim 7, wherein
when displaying the information of the working data belonging to the same group, as for the respective working data, the group information displaying unit displays a node corresponding to the selected one piece of working data and a node corresponding to the other piece of working data belonging to the group in combination, in a structural causal model.

**9.** The work improvement support device according to claim 8, wherein
in displaying the information of the working data belonging to the same group, as for the respective working data, the group information displaying unit displays the node corresponding to the other working data belonging the group, when predetermined instructing means of the user interface approaches the node corresponding to the selected one piece of working data within a predetermined distance range.

**10.** The work improvement support device according to claim 7, wherein
in displaying the information of the working data belonging to the same group, as for the respective working data, the group information displaying unit displays the node corresponding to the selected one piece of working data and the node corresponding to the other piece of working data belonging to the group in combination, in the structural causal model, receives a user's instruction for shifting the node corresponding to the other piece of working data to a display position of the node corresponding to the selected one piece of working data, and sets the other piece of working data, instead of the selected one piece of working data, as the selection target, when receiving a user's instruction for making the node corresponding to the one piece of working data away from the node corresponding to the other piece of working data.

**11.** The work improvement support device according to claim 3, wherein
the group information displaying unit displays a node corresponding to the other working data directly coupled by an edge in the structural causal model, in a predetermined form, as for the predetermined working data receiving a user's instruction.

**12.** The work improvement support device according to claim 2, wherein
when displaying the estimated structural causal model, the group information displaying unit further arranges a node indicating the information of the regression formula about a relation between the corresponding working data, between the nodes corresponding to the respective working data in the structural causal model.

**13.** A work improvement support method by which a work improvement support device for estimating a structural causal model among predetermined working data, on the basis of the working data, **characterized in that** the work improvement support method causing the device to perform processes of:

calculating a nonlinear value as for the working data and adding the nonlinear value to the working data,
calculating a regression formula as for the respective working data according to multiple linear regression analysis,
determining whether there is a linear term in the calculated regression formula and setting predetermined data comprising the linear term and an objective variable of the regression formula as the same group, and
selecting the working data, excluding the predetermined data, as explanatory variable candidates for a multiple linear regression analysis.

# FIG. 1A

WORK IMPROVEMENT SUPPORT DEVICE

# FIG. 1B

WORKING DATA GROUP

WORKING DATA1 : MAINTENANCE COSTS

WORKING DATA2 : LABOR COSTS

WORKING DATA3 : NUMBER OF WORKERS

WORKING DATA4 : AVERAGE TRAIN SPEED

# FIG. 1C

104

PROCESSOR

| INFORMATION OBTAINING UNIT | 110 |

| NONLINEAR TERM ADDING UNIT | 111 |

| MULTIPLE REGRESSION ANALYSIS UNIT | 112 |

| DATA GROUP SETTING UNIT | 113 |

| EXPLANATORY VARIABLE CANDIDATE SELECTING UNIT | 114 |

| CORRELATION COEFFICIENT CALCULATING UNIT | 115 |

DATA DISTANCE SETTING UNIT — 116

| SIMILAR WORD LIST | 1161 |

| KEY WORD DETERMINING UNIT | 1162 |

| DATA CLASSIFYING UNIT | 1163 |

| GROUP INFORMATION DISPLAYING UNIT | 117 |

# FIG. 2

201 — OBTAIN AND DISPLAY WORKING DATA LIST

202 — RECEIVE KPI SELECTION

203 — OBTAIN RELATED DATA

204 — CALCULATE NONLINEAR VALUE OF RELATED DATA AND ADD ABOVE TO RELATED DATA

205 — SET OBJECTIVE VARIABLE AND EXPLANATORY VARIABLE CANDIDATES

206 — MULTIPLE LINEAR REGRESSION ANALYSIS

207 — DETERMINE REGRESSION FORMULA OF OBJECTIVE VARIABLE Y

208 — COMPLETION CONDITION? — NO

YES

209 — STORE STRUCTURAL CAUSAL MODEL

# FIG. 3

① EXECUTE SINGLE REGRESSION ANALYSIS AS FOR EVERY COMBINATION OF EXPLANATORY VARIABLE CANDIDATES (STEP 301)

② GROUP DATA HAVING PREDETERMINED CORRELATION COEFFICIENT AND MORE (STEP 302)

③ SELECT A PIECE OF DATA ONE BY ONE FROM EACH GROUP, AS EXPLANATORY VARIABLE CANDIDATES, AND STORE HISTORY OF EXCLUDED DATA (STEP 303)

EXPLANATORY VARIABLE CANDIDATES

# FIG. 4

205 SET OBJECTIVE VARIABLE AND EXPLANATORY VARIABLE CANDIDATES

206

401 MULTIPLE LINEAR REGRESSION ANALYSIS

402 TEMPORARILY DETERMINE REGRESSION FORMULA OF OBJECTIVE VARIABLE

403 THERE IS LINEAR TERM?

YES

405 STORE HISTORY OF GROUP

404 RESET EXPLANATORY VARIABLE CANDIDATES (DELETE STRUCTURE VARIABLE OF LINEAR TERM)

NO

207 DETERMINE REGRESSION FORMULA OF OBJECTIVE VARIABLE Y

# FIG. 5

| STRUCTURAL CAUSAL MODEL | DATA INFORMATION |
|---|---|
| | NAME: ⁓606 MAINTENANCE COSTS<br>REGRESSION FORMULA: 607 $Y=AX_1^2+BX_2^2$ ⁓<br>COEFFICIENT:<br>A:0.32<br>B:1.22 ⎯608<br>EXPLANATORY VARIABLE:<br>$X_1$:AVERAGE TRAIN SPEED ⎯609<br>$X_2$:NUMBER OF WORKERS<br>CAUSAL GROUP:<br>−RAIL EXCHANGE NUMBER ⎯610<br>−RAIL ABRASION SPEED<br>COLLINEAR GROUP:<br>−LABOR COSTS<br>− ⎯611 |

601 605

# FIG. 6

STRUCTURAL CAUSAL MODEL

602

603

AVERAGE TRAIN SPEED

0.32

MAINTENANCE COSTS

1.22

NUMBER OF WORKERS

612

GROUP DATA

CAUSAL GROUP:
- RAIL EXCHANGE NUMBER
- RAIL ABRASION SPEED

610

COLLINEAR GROUP:
LABOR COSTS
-

611

613

EXCHANGE

ADD TO MODEL

601

# FIG. 7

STRUCTURAL CAUSAL MODEL

602

701

702

DATA NAME:LABOR COSTS

EXCHANGE

ADD TO MODEL

MAINTENANCE COSTS

0.32

AVERAGE TRAIN SPEED

1.22

603

NUMBER OF WORKERS

601

# FIG. 8

NORMAL (STEP 801)
(CURSOR IS FAR)

GROUP DATA DISPLAY (STEP 802)
(CURSOR IS NEAR)

603    602    701

MAINTENANCE COSTS

805    804

RAIL EXCHANGE NUMBER    LABOR COSTS

MAINTENANCE COSTS

RAIL ABRASION SPEED

702

RAIL EXCHANGE NUMBER

MAINTENANCE COSTS

RAIL ABRASION SPEED

LABOR COSTS

DATA NAME:LABOR COSTS

EXCHANGE

ADD TO MODEL

STEP 803

EP 3 499 437 A1

# FIG. 9

DATA EXCHANGE

DRAG GROUP DATA AND DROP IT TO APEX (STEP 901)

EXCHANGE WORKING DATA OF APEX FOR SELECTED GROUP DATA (STEP 902)

ADD DATA TO MODEL

DRAG GROUP DATA AWAY FROM APEX (STEP 903)

SELECTED GROUP DATA ARE ADDED TO STRUCTURAL CAUSAL MODEL (STEP 904)

27

# FIG. 10

## FIG. 11A

602

$X_1$

604

$X_2X_3$ — 650

604

604

$X_2$

$X_3$

602

602

## FIG. 11B

$X_1$ — 602

604

$X_2{}^2$ — 650

604

$X_2$ — 602

## FIG. 11C

$X_1$ — 602

604

$\delta X_2$ — 650

604

$X_2$ — 602

# FIG. 12

20

## WORK CONTROL SYSTEM

KPI DATA
(PASS NUMBER 0)

COMMON
KEY-1

COMMON
KEY-2

TABLE 1

TABLE 2

TABLE 3

=DISTANCE 1

=DISTANCE 2

=DISTANCE 3

# FIG. 13

REGISTER SIMILAR WORD LIST

| REGISTER | CREATE NEW GROUP |

| GROUP1 | GROUP2 | GROUP3 |
|---|---|---|
| ·COSTS<br>·FEE<br>·CHARGE<br>·REVENUES<br>·EXPENDITURES | ·NUMBER<br>·NUMBER OF<br>TIMES<br>·AMOUNT<br>·NUMBER OF<br>DAYS<br>·FREQUENCY<br>·MEASURED<br>VALUE | ·RATE<br>·SPEED<br>·RATIO<br>·PROBABILITY<br>·INPUT VALUE<br>·DISTANCE |

=DISTANCE 2 ▼

=DISTANCE 3 ▼

1100  1110  1111  1101  1102  1103  1115  1116

## INTERNATIONAL SEARCH REPORT

| | International application No. |
|---|---|
| | PCT/JP2018/001532 |

**A. CLASSIFICATION OF SUBJECT MATTER**
Int.Cl. G06Q10/04(2012.01)i, G05B19/418(2006.01)i

According to International Patent Classification (IPC) or to both national classification and IPC

**B. FIELDS SEARCHED**

Minimum documentation searched (classification system followed by classification symbols)
Int.Cl. G06Q10/04, G05B19/418

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-65598 A (HITACHI, LTD.) 09 March 2006, entire text, all drawings & US 2006/0047454 A1, whole document & CN 1740934 A | 1-13 |
| A | JP 2016-31714 A (NIPPON TELEGRAPH AND TELEPHONE CORP.) 07 March 2016, entire text, all drawings (Family: none) | 1-13 |
| A | JP 5-233011 A (NIPPON TELEGRAPH AND TELEPHONE CORP.) 10 September 1993, entire text, all drawings (Family: none) | 1-13 |
| A | JP 2015-52862 A (TOSHIBA CORP.) 19 March 2015, entire text, all drawings & US 2015/0073860 A1, whole document | 1-13 |
| A | WO 2016/079972 A1 (NEC CORP.) 26 May 2016, entire text, all drawings & US 2017/0315960 A1, whole document | 1-13 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 March 2018 (29.03.2018) | 10 April 2018 (10.04.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006065598 A
- JP 2016031714 A
- JP 5233011 A

**Non-patent literature cited in the description**

- The Railway Technical Strategy 2012. *Rail Safety and Standards Board, Tech. Rep.,* 2012, http://futurerailway.org/RTS
- **J. W. FORRESTER.** Industrial Dynamics. MIT Press, 1961